(19) Europäisches Patentamt
European Patent Office
Office européen des brevets

(11) **EP 2 981 065 B1**

(12) **EUROPEAN PATENT SPECIFICATION**

(45) Date of publication and mention
of the grant of the patent:
**20.02.2019 Bulletin 2019/08**

(51) Int Cl.:
*H04N 5/235* (2006.01)          *H04N 5/232* (2006.01)
*G06K 9/34* (2006.01)          *G06T 7/00* (2017.01)

(21) Application number: **15179325.4**

(22) Date of filing: **31.07.2015**

(54) **LIGHT METERING METHOD AND DEVICE**

LICHTMESSVERFAHREN UND VORRICHTUNG

DISPOSITIF ET PROCÉDÉ DE MESURE DE LUMIÈRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.07.2014 CN 201410373717**

(43) Date of publication of application:
**03.02.2016 Bulletin 2016/05**

(73) Proprietor: **Xiaomi Inc.
Beijing 100085 (CN)**

(72) Inventors:
• **QIN, Qiuping
100085 BEIJING (CN)**
• **ZHANG, Tao
100085 BEIJING (CN)**
• **LIU, Lin
100085 BEIJING (CN)**

(74) Representative: **Delumeau, François Guy et al
Cabinet Beau de Loménie
158, rue de l'Université
75340 Paris Cedex 07 (FR)**

(56) References cited:
**EP-A1- 2 698 693     JP-A- 2010 072 619
US-B1- 7 034 881**

• **WANG TINGHUAI ET AL: "TouchCut: Fast image
and video segmentation using single-touch
interaction", COMPUTER VISION AND IMAGE
UNDERSTANDING, vol. 120, 1 March 2014
(2014-03-01), pages 14-30, XP028605679, ISSN:
1077-3142, DOI: 10.1016/J.CVIU.2013.10.013**
• **JIAYI LIANG ET AL: "An Auto-exposure algorithm
for detecting high contrast lighting conditions",
2007 7TH INTERNATIONAL CONFERENCE ON
ASIC, 1 October 2007 (2007-10-01), pages
725-728, XP055194926, DOI:
10.1109/ICASIC.2007.4415733 ISBN:
978-1-42-441132-0**

## Description

## TECHNICAL FIELD

The invention generally relates to the field of terminal technology, and more particularly, to a light metering method and device.

## BACKGROUND

Light metering is a process of metering the brightness of a photographed object, which is a basis of automatic exposure of a camera to display images in pictures. Accurate light metering and correct light metering manner selection are the starting point of photography creation.

By taking a digital camera as an example, generally the light metering manner of a light metering system of the digital camera is TTL ("Through The Lens", i.e. metering the intensity of light reflected by an object photographed through the lens). A light metering sensor is placed in a photography light path, and light is reflected from a retroreflector onto a light metering element for light metering. Metered light intensity data is transmitted to a processor of a camera, and an exposure combination (namely, a combination of a shooting aperture priority mode and a shutter speed) is determined after a calculation process of automatic exposure. According to different areas, sizes and calculation weights that are metered in a viewfinder coverage by the light metering sensor, light metering manners may be classified into: average metering, center-weighted metering, spot metering, matrix metering and other modes.

Wherein, the light metering range of spot metering is a region where the center of a viewfinder image occupies 1-3% of the whole image area. Spot metering is scarcely influenced by the brightness of other sceneries outside a light metering area. Therefore, spot metering may be conveniently used to detect all regions of a photographed object or a background.

Along with the maturing and wide application of touch screens, on a camera and a smartphone provided with a touch screen, a user may select a position for spot focusing by clicking any spot (instead of the center position) on a preview interface, which greatly improves the effect and usability of spot metering.

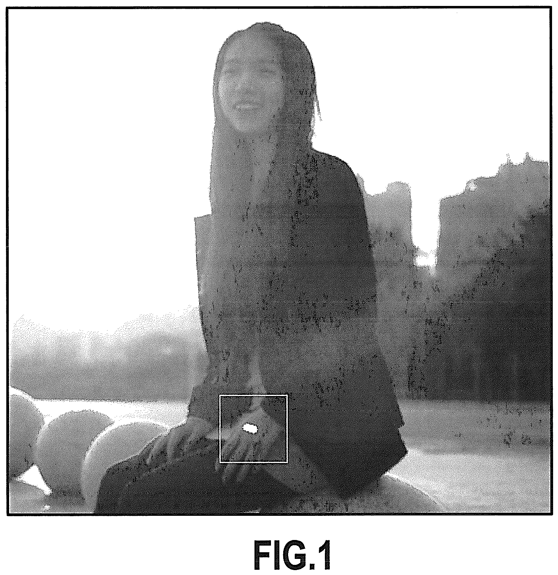

In related technologies of spot metering, firstly a light metering spot is determined, which may be the center spot in a preview interface, or any spot in a preview interface selected by a user through a touch screen, and then a rectangle or a circle is made by taking the light metering spot as a center, which deviates toward a center region in case of encountering a boundary. During light metering, a light metering range is the region (the rectangle or the circle). By taking a shooting scene as shown in Fig.1 as an example, when a user clicks the left hand (the position of a white spot in the Fig.1) of the person on the touch screen, the hand being taken as a light metering spot, the light metering region is the white box region in the Fig.1.

However, in the foregoing technical solution of spot metering, the difference between an actual metering result and the user intention may be relatively large. As shown in Fig.1, the user expects to only take the region of the left hand skin as a light metering range for light metering, but the actual light metering range includes clothes parts of both the left sleeve cuff and right sleeve cuff. When the brightness of the clothes parts is approximate to that of the skin color of the left hand in light metering range, a final light metering result is less affected by the clothes parts. However, a final light metering result is greatly affected when the difference between the color of the clothes parts and the skin color of the left hand is relatively large. Under such circumstances, the brightness of the image is darker than the expected brightness after the exposure combination is adjusted according to the light metering result.

Document US 7, 034, 881 B1 discloses an electronic camera provided with a touchscreen that enables to record, reproduce and print an image while regarding a principal subject designated by a cameraman.

Document EP 2 698 693 A1 discloses a method for local image translation and a terminal with a touch screen.

## SUMMARY

In order to overcome problems in related technologies, the invention provides a light metering method and a device, capable of improving light metering accuracy, as defined in the claims.

According to another aspect of the embodiments of the invention, there is provided a terminal, comprising:

    a processor;
    a memory configured to store instructions executable by the processor;
    wherein, the processor is configured to:

        acquire a touch screen point inputted by users and situated in a light metering area;
        determine an initial light metering area comprising the touch screen point in an entire image displayed on a touchscreen;
        segment an image comprised in the initial light metering area into a background region dispensed with light metering and an object region comprising the touch screen point and finally serving as a light metering area; and
        meter image points within the object region.

A computer program is provided according to another aspect of the invention. The computer program performs the steps of the light metering method when this program is executed by a computer.

This program can use any programming language and take the form of source code, object code or a code intermediate between source code and object code, such as a partially compiled form, or any other desirable form.

The invention is also directed to a computer-readable information medium containing instructions of the computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solution according to the embodiments of the invention may include the following beneficial effects: in the process of light metering, acquiring a touch screen point inputted by users and situated in a light metering area; determining an initial light metering area comprising the touch screen point in an entire image displayed on a touchscreen; segmenting an image comprised in the initial light metering area into a background region dispensed with light metering and an object region comprising the touch screen point and finally serving as a light metering area; and metering image points within the object region. It is possible to avoid unnecessary impact of image points in a background region on image points in an object region during light metering thanks to segmenting an initial light metering area into a background region dispensed with light metering and an object region comprising the touch screen point and finally serving as a light metering area and only metering image points within the object region, thus greatly improving the metering accuracy of image points within the object region.

## BRIEF DESCRIPTION OF THE DRAWINGS

The accompanying drawings, which are incorporated in and constitute a part of this specification, illustrate embodiments consistent with the invention and, together with the description, serve to explain the principles of the invention.

Fig.1 is a schematic diagram showing a shooting scene according to the present disclosure.
Fig.2 is an exemplary flowchart of a light metering method according to the embodiments of the present disclosure.
Fig.3 is a schematic diagram of an initial light metering area in the present disclosure.
Fig.4 is an implementation process schematic diagram of Step S203 in the present disclosure.
Fig.5 is an implementation process schematic diagram for determining attributes of an Nth to-be-tagged point in the present disclosure.
Fig.6 is a schematic diagram for determining an initial light metering area in Fig.1 in the present disclosure.
Fig.7 is a schematic diagram for determining an object region in Fig.1 in the present disclosure.
Fig.8 is a block diagram of a light metering device according to the embodiments of the present disclosure.
Fig.9 is an implementation structure schematic diagram of an image segmentation module in Fig.8.
Fig.10 is an implementation structure schematic diagram of an Nth to-be-tagged point attribute determination unit in Fig.9.
Fig.11 is a block diagram of a terminal equipment embodiment according to the embodiments of the invention.

## DESCRIPTION OF THE EMBODIMENTS

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

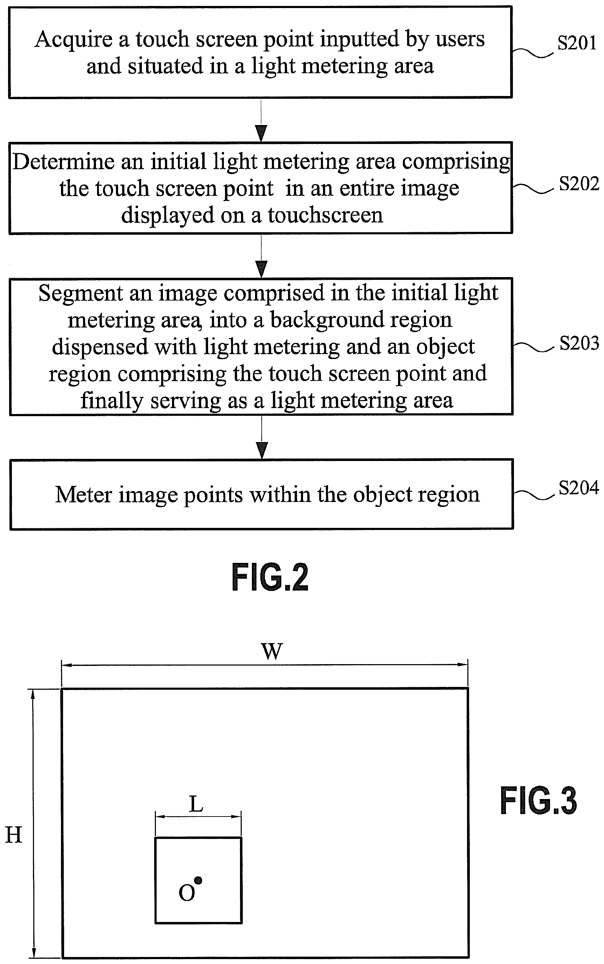

Fig. 2 is a flow chart showing a light metering method according to an exemplary embodiment, as shown in Fig.2, the light metering method is applied to a terminal, comprising following steps:

In Step S201, a touch screen point inputted by users and situated in a light metering area is acquired;
In Step S202, an initial light metering area comprising the touch screen point in an entire image displayed on a touchscreen is determined;
In Step S203, an image comprised in the initial light metering area is segmented into a background region dispensed with light metering and an object region comprising the touch screen point and finally serving as a light metering area; and
In Step S204, image points within the object region are metered.

In Step S201, users click on a touch screen if they need metering a partial area in a whole image displayed on the touch screen, thus a touch screen point is situated in a light metering area. A touch screen point is an important reference point required for a follow-up image segmentation.

In Step S202, according to the touch screen point, the terminal may determine an initial light metering area that needs to be metered in the whole image displayed on the touchscreen, the touch screen point being situated in the initial light metering area.

In this step, in order to ensure that all image points that need to be metered are comprised in the initial light metering area, generally, a rectangular region is defined by taking the touch screen point as the center of this region, the light metering range including the image points within the rectangular region.

However, when an initial light metering area is determined, a rectangular region often exceeds the image region that the user really wants to meter. In other words, the initial light metering area often includes some regions which do not need to be light metered, these regions often exerting an influence on regions which really need to be light metered, thus making the final light metering result inaccurate. For example, as shown in Fig. 1, an image region of clothes parts of left sleeve cuff and right sleeve cuff is a region that does not need to be light metered.

In order to avoid such a defect, in Step S203 according to the invention, images contained in the initial light metering area are segmented by using a segmentation algorithm into two parts: a background region and an object region, wherein a region that does not need to be light metered is defined as a 'background region', and a region comprising the touch screen point and finally serving as a light metering area is defined as an 'object region'.

In the Step S203, by means of image segmentation, an image region which does not need to be metered is differentiated from an image region which needs to be metered.

In Step S204, after the image segmentation is completed, the terminal only conducts metering on the image points in the object region which really needs to be metered.

The embodiments of the present disclosure comprise: in the process of light metering, acquiring a touch screen point inputted by users and situated in a light metering area; determining an initial light metering area comprising the touch screen point in an entire image displayed on a touchscreen; segmenting an image comprised in the initial light metering area into a background region dispensed with light metering and an object region comprising the touch screen point and finally serving as a light metering area; and metering image points within the object region. It is thus possible to avoid unnecessary impact of image points in the background region on the image points in the object region during the light metering by segmenting the initial light metering area into the background region dispensed with light metering and the object region comprising the touch screen point and finally serving as the light metering area and by only metering the image points within the object region, thus greatly improving the metering accuracy of the image points within the object region.

Reference will now be made in detail to the foregoing image segmentation process hereinafter for the convenience of understanding the technical solution in the invention.

The range of a traditional spot metering occupies 1~3% of a whole preview image, and this ratio is constant on a specific equipment. In the invention, in order to cover a target focusing region to a maximum range, a light metering range is properly magnified to 1~8%. As shown in Fig. 3, the square region whose side length is L is an initial light metering area. This square takes the touch screen point as the center, and the calculation formula of the side length L is:

$$L = \mathrm{sqrt}\,(W{*}H{*}8/100)$$

In the above formula, H stands for the length of a preview image, while W stands for the width of the preview image. sqrt() stands for a function for calculating a positive square root.

Different from conventional processing manners, in the invention, an object region finally serving as a light metering area may not be an initial light metering area. Therefore, an object region shall be finally determined according to image segmentation results of an initial light metering area.

Prior to an illustration of the image segmentation method in the invention, firstly some forthcoming terms are explained as below:

1. Adjacent points: in the invention, adjacent points of an image point refer to points situated in four directions (up, down, left and right) of the image point;

2. Color distance: supposing two image points P1 and P2, RGB color value corresponding to P1 is P1 (r1, g1, b1), RGB color value corresponding to P2 is P2 (r2, g2, b2), abs() is an absolute value function, r=abs (r1-r2), g=abs (g1-g2), b=abs (b1-b2), and the color distance between P1 and P2 is the maximum value among r, g and b.

Typically, as the range of each color channel of an RGB color value is [0, 255], the range of a color distance between two image points is also [0, 255].

3. Segmentation points: in the invention, segmentation points are image points where an object region and a background region overlap.

4. Tagged points: in the invention, tagged points are image points whose attributes have been determined. In the invention, the attributes of the tagged points are classified into: object region point (including the touch screen point), background region point (including image boundary points of the initial light metering area) and segmentation point.

5. To-be-tagged points: in the invention, to-be-tagged points are image points, that are adjacent to (in the up, down, left and right direction of) the tagged points, whose attributes wait to be determined.

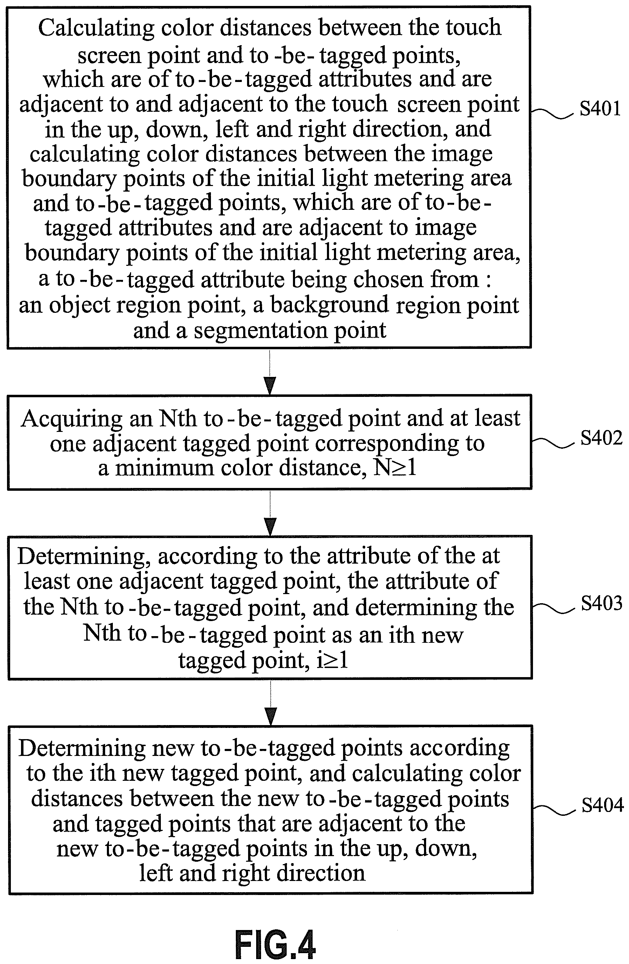

In a preferred embodiment of the invention, one concrete implementation of the foregoing Step S203 is shown in Fig.4, and the image segmentation process may include following execution steps:

During the initialization of the image segmentation process, initial tagged points and initial to-be-tagged points are determined, and color distances between initial to-be-tagged points and initial tagged points that are adjacent to (in the up, down, left and right direction of) these initial to-be-tagged points are calculated.

In this embodiment, the initial tagged points include an initial object region point (i.e. the touch screen point) and initial background region points (i.e. all points on the image boundary of the initial light metering area). The initial to-be-tagged points are image points adjacent to (in the up, down, left and right direction of) the initial object region point (i.e. the image points adjacent to the touch screen point) and image points adjacent to the initial background region points (i.e. the image points within the image boundary and adjacent to the image boundary points).

Particularly, in Step S401, color distances between the touch screen point and to-be-tagged points, which are of to-be-tagged attributes and are adjacent to (in the up, down, left and right direction of) the touch screen point, are calculated, and color distances between the image boundary points of the initial light metering area and to-be-tagged points, which are of to-be-tagged attributes and are adjacent to the image boundary points, are calculated, a to-be-tagged attribute is chosen from: an object region point, a background region point and a segmentation point. During this Step S401, a plurality of color distances are obtained (for example, 256 values from 0 to 255), each color distance corresponding to a to-be-tagged point and a tagged point that is adjacent to this to-be-tagged point. In this embodiment, the obtained color distances and the corresponding to-be-tagged points and tagged points are stored in a plurality of linked lists, each linked list storing one of the plurality of color distances and one or more pairs of to-be-tagged point and tagged point corresponding to this color distance, and each linked list having one or more data structures to store the coordinates of these to-be-tagged points and tagged points. In Step S402, an Nth to-be-tagged point and at least one adjacent tagged point corresponding to a minimum color distance are acquired, N≥1. In the image segmentation process, N is an integer and begins from 1. The acquired at least one adjacent tagged point is adjacent to (in the up or down or left or right direction of) the acquired Nth to-be-tagged point.

In Step S403, the attribute of the Nth to-be-tagged point is determined according to the attribute of the at least one adjacent tagged point, the Nth to-be-tagged point is determined as an ith new tagged point, i≥1. N and i are incremented by 1. In the image segmentation process, i is an integer and begins from 1. In this embodiment, after the determination of the attribute, the Nth to-be-tagged point is deleted from the linked list corresponding to the minimum color distance. The concrete implementation of this step is described in details hereafter. In Step S404, new to-be-tagged points are determined according to the ith new tagged point, and color distances between the new to-be-tagged points and tagged points that are adjacent to (in the up, down, left and right direction of) the new to-be-tagged points are calculated. In this embodiment, the new to-be-tagged points and their adjacent tagged points are stored into the linked lists corresponding to the calculated color distances. In this document, any to-be-tagged point should be within the image boundary, be in the up, down, left or right direction of a tagged point, be adjacent to a tagged point, and whose attribute is not determined.

Thus, a cycle of Steps S402 to S404 is competed,. The cycle of Steps S402 to S404 is repeated until the attributes of all the to-be-tagged points are determined. For example, during the step S402 of a second cycle, a second to-be-tagged point and its adjacent tagged point corresponding to a minimum color distance are acquired. This minimum color distance is obtained from the color distances calculated in the step S401 and S404 of the first cycle.

In the above steps, the attribute of the Nth to-be-tagged point may be: object region point, background region point or segmentation point.

After the attributes of all the to-be-tagged points are determined, the object region is composed of object region points, and the background region is composed of background region points. The object region and the background region are segmented by segmentation points.

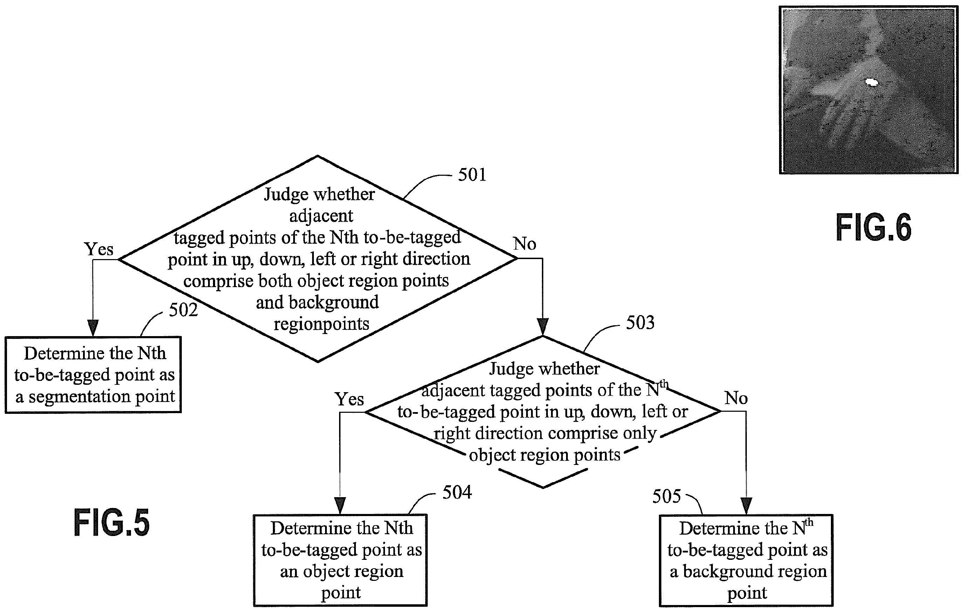

It should be explained that, in the foregoing image segmentation process, the concrete implementation of the step S403 of determining the attribute of the Nth to-be-tagged point according to the attribute of the at least one adjacent tagged point is shown in Fig.5, which comprises:

in Step S501, judging whether the attribute of the at least one adjacent tagged point of the Nth to-be-tagged point comprises both the object region point and the background region point; going to Step S502 if the at least one adjacent tagged point comprises both the object region point and the background region point; otherwise, going to Step S503;
in Step S502, determining the attribute of the Nth to-be-tagged point as the segmentation point;
in Step S503, judging whether the at least one adjacent tagged point of the Nth to-be-tagged point only comprises the object region point; going to Step S504 if the adjacent tagged points only comprise the background region points; otherwise, going to Step S505;
in Step S504, determining the attribute of the Nth to-be-tagged point as the object region point; and
in Step S505, determining the attribute of the Nth to-be-tagged point as the background region point.

By means of this implementation, it is possible to accurately determine the attributes of all the to-be-tagged points, thus greatly improving the accuracy of follow-up light metering.

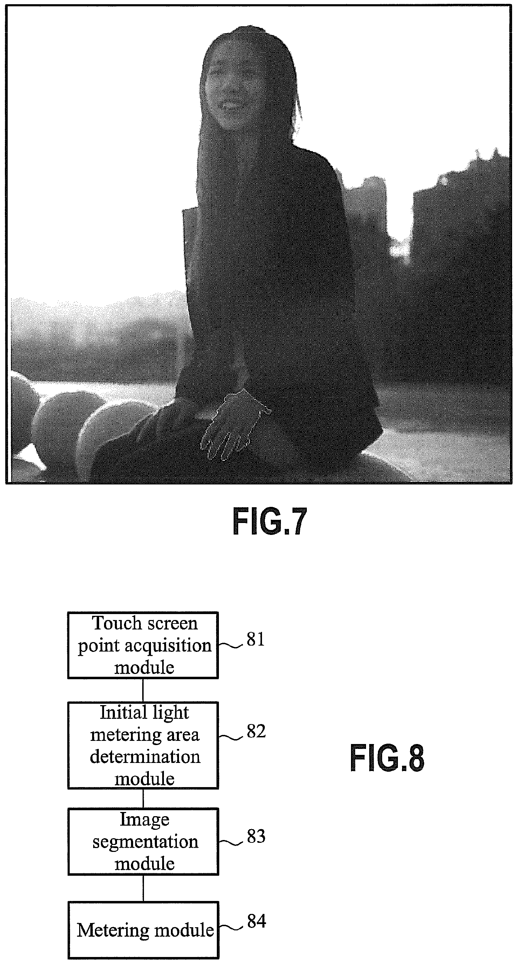

The foregoing light metering method is illustrated by means of a concrete application scenario hereinafter. Still by taking the shooting scene as shown in Fig. 1 as an example, when a user clicks the left hand (the position of a white spot in the Fig.1) of the person on the touch screen, the hand being taken as a light metering spot, the terminal firstly determines an initial light metering area comprising the touch screen point, as shown in Fig.6. It can be seen that the initial light metering area as shown in Fig. 6 includes an image part of the left hand that needs to be light metered and other image parts (for example, a left sleeve cuff and a right sleeve cuff). Therefore, it is necessary to segment the image comprised in the initial light metering area, thus segmenting the image into a background region dispensed with light metering and an object region comprising the touch screen point and finally serving as a light metering area. According to the foregoing image segmentation process, a segmentation line is acquired after the image segmentation, consisting of all the segmentation points and defining more accurately the figure's left hand region (as shown in Fig. 7). Finally, image points within the left hand region defined in Fig. 7 are metered, thereby avoiding an influence on a final light metering result when the difference between the color of the other image parts and the color of the image part of the left hand is large, thus greatly improving the light metering accuracy.

Fig. 8 is a schematic diagram of a light metering device according to an exemplary embodiment. Referring to Fig.8, the device comprises:

a touch screen point acquisition module 81, configured to acquire a touch screen point inputted by users and situated in a light metering area;
an initial light metering area determination module 82, configured to determine an initial light metering area comprising the touch screen point in an entire image displayed on a touchscreen;
an image segmentation module 83, configured to segment an image comprised in the initial light metering area into a background region dispensed with light metering and an object region comprising the touch screen point and finally serving as a light metering area; and
a metering module 84, configured to meter image points within the object region.

The embodiments of the invention comprises: in the process of light metering, acquiring a touch screen point inputted by users and situated in a light metering area; determining an initial light metering area comprising the touch screen point in an entire image displayed on a touchscreen; segmenting an image comprised in the initial light metering area into a background region dispensed with light metering and an object region comprising the touch screen point and finally serving as a light metering area; and metering image points within the object region. It is possible to avoid unnecessary impact of image points in a background region on image points in an object region during light metering thanks to segmenting an initial light metering area into a background region dispensed with light metering and an object region comprising the touch screen point and finally serving as a light metering area and only metering image points within the object region, thus greatly improving the metering accuracy of image points within the object region.

The range of a traditional spot metering occupies 1~3% of a whole preview image, and the ratio is constant on specific equipment. In the invention, in order to cover a target focusing region to the maximum range, a light metering range is properly magnified to 1~8%.

Different from conventional processing manners, in invention, an object region finally serving as a light metering area may not be an initial light metering area. Therefore, an object region shall be finally determined according to image segmentation results of an initial light metering area.

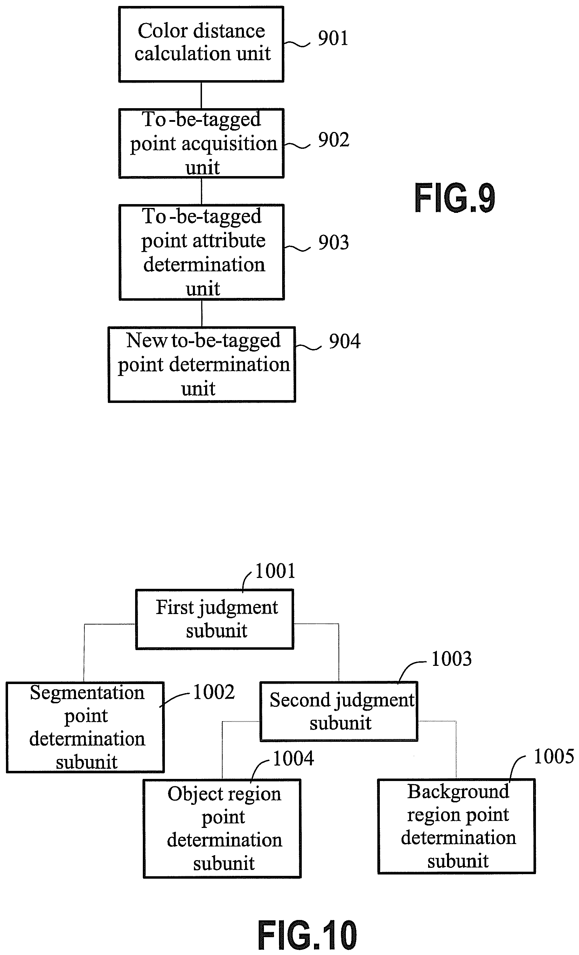

In a preferred embodiment of the invention, an implementation of an image segmentation module is as shown in Fig.9, comprising:

a color distance calculation unit 901, configured to calculate color distances between the touch screen point and to-be-tagged points, which are of to-be-tagged attributes and are adjacent to the touch screen point in the up, down, left and right direction, and to calculate color distances between the image boundary points of the initial light metering area and to-be-tagged points, which are of to-be-tagged attributes and are adjacent to the image boundary points, a to-be-tagged attribute being chosen from : an object region point, a background region points and a segmentation point;
a to-be-tagged point acquisition unit 902, configured to acquire an Nth to-be-tagged point and at least one adjacent tagged point corresponding to a minimum color distance, $N \geq 1$;
a to-be-tagged point attribute determination unit 903, configured to determine, according to the attribute of the at least one adjacent tagged point, the attribute of the Nth to-be-tagged point, and to determine the Nth to-be-tagged point as an ith new tagged point, $i \geq 1$. N and i are incremented by 1;
a new to-be-tagged point determination unit 904, configured to determine new to-be-tagged points according to the ith new tagged point, and the color distance calculation unit 901 is further configured to calculate color distances between the new to-be-tagged points and tagged points that are adjacent to (in the up, down, left and right direction of) the new to-be-tagged points.

Thus, the object region is composed of the object region points, the background region is composed of the background region points, and both the object region and the background region are segmented by the segmentation points.

In another preferred embodiment of the invention, an implementation of the foregoing to-be-tagged point attribute determination unit 903 is as shown in Fig. 10, comprising:

a first judgment subunit 1001, configured to judge whether the attribute of the at least one adjacent tagged point of the Nth to-be-tagged point comprises both the object region point and the background region point; and to trigger a segmentation point determination subunit 1002 in a case where the attribute of the at least one adjacent tagged point comprises both the object region point and the background region point; otherwise, to trigger a second judgment subunit 1003;

the segmentation point determination subunit 1002, configured to determine the attribute of the Nth to-be-tagged point as the segmentation point in the case where the attribute of the at least one adjacent tagged point comprises both the object region point and the background region point;

the second judgment subunit 1003, configured to judge whether the attribute of the at least one adjacent tagged points only comprises the object region point; and to trigger an object region point determination subunit 1004 in a case where the attribute of the at least one adjacent tagged point only comprises the object region point; otherwise, to trigger a background region point determination subunit 1005.

the object region point determination subunit 1004, configured to determine the attribute of the Nth to-be-tagged point as the object region point; and

the background region point determination subunit 1005, configured to determine the attribute of the Nth to-be-tagged point as the background region point. By means of the implementation, it is possible to accurately determine attributes of to-be-tagged points, thus greatly improving the accuracy of follow-up light metering.

With regard to the device in the above embodiment, detailed description of specific manners for conducting operation of modules has been made in the embodiment related to the method, no detailed illustration will be made herein.

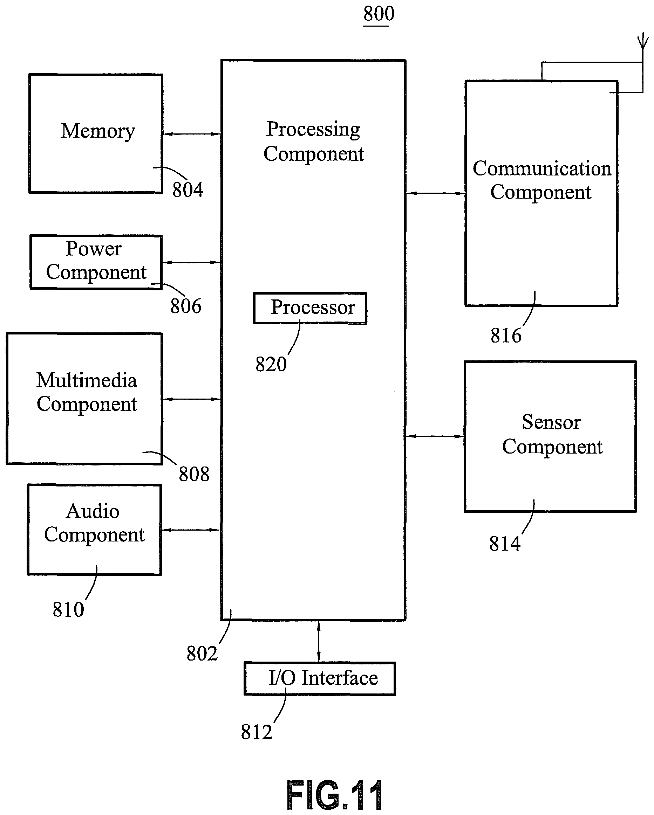

Fig. 11 is a block diagram of a light metering device 800 according to an exemplary embodiment. For example, the device 800 may be a mobile telephone, a computer, a digital broadcasting terminal, a message transceiver device, a games console, a tablet device, a medical device, a fitness facility, a PDA (personal digital assistant) and the like.

Referring to Fig.11, the device 800 may include one or a plurality of components as below: a processor component 802, a memory 804, a power supply component 806, a multimedia component 808, an audio component 810, an input/output (I/O) interface 812, a sensor component 814 and a communication component 816.

The processor component 802 usually controls the overall operation of the device 800, for example, display, telephone call, data communication, and operation associated with camera operation and record operation. The processor component 802 may include one or a plurality of processors 820 for executing instructions so as to complete steps of above method in part or in whole. In addition, the processor component 802 may include one or a plurality of modules for the convenience of interaction between the processor component 802 and other components. For example, the processor component 802 may include a multimedia module for the convenience of interaction between the multimedia component 808 and the processor component 802.

The memory 804 is configured to store data of different types so as to support the operation of the device 800. Examples of the data include any application program or approach directive for operation of the device 800, including contact data, phonebook data, message, picture and video, etc. The memory 804 may be realized by volatile or non-volatile memory device of any type or combination thereof, for example, static random access memory (SRAM), electrically erasable programmable read-only memory (EEPROM), erasable programmable read only memory (EPROM), programmable read-only memory (PROM), read-only memory (ROM), magnetic memory, flash memory, magnetic disk or optical disk.

The power supply component 806 provides power for components of the device 800. The power supply component 806 may include a power management system, one or a plurality of power supplies, and other components associated with generation, management and power distribution of the device 800.

The multimedia component 808 includes a screen between the device 800 and a user and for providing an output interface. In some embodiments, the screen may include an LCD (Liquid Crystal Display) and a touch panel (TP). If the screen includes a touch panel, the screen may be realized as a touch screen for receiving input signal from users. The touch panel includes one or a plurality of touch sensors for sensing gestures on the touch panel, for example, touching and sliding, etc. The touch sensor not only can sensor trip boundary of touching or sliding, but also can detect the duration and pressure related to the touching or sliding operation. In some embodiments, the multimedia component 808 includes a front-facing camera and/or a rear-facing camera. When the device 800 is under an operation mode, for example, capture mode or video mode, the front-facing camera and/or the rear-facing camera may receive external multimedia data. Each front-facing camera and rear-facing camera may be a fixed optical lens system or have focal length and optical zoom capacity.

The audio component 810 is configured to output and/or input audio signal. For example, the audio component 810 includes a microphone (MIC); when the device 800 is under an operation mode such as call mode, record mode and speech recognition mode, the microphone is configured to receive external audio signal. The audio signal received may be further stored in the memory 804 or sent out by the communication component 816. In some embodiments, the audio component 810 also includes a loudspeaker for outputting audio signal.

The I/O interface 812 provides interface for the processor component 802 and peripheral interface modules, the peripheral interface modules may be a keyboard, a click wheel and buttons, etc. These buttons may include but not limited to: home button, volume button, start button and locking button.

The sensor component 814 includes one or a plurality of sensors for providing the device 800 with state evaluation from all aspects. For example, the sensor component 814 may detect the on/off state of the device 800, relative positioning of components, for example, the components are the displayer and keypads of the device 800; the sensor component 814 also may detect the position change of the device 800 or a component thereof, the presence or absence of users' touch on the device 800, the direction or acceleration/deceleration of the device 800, and temperature variation of the device 800. The sensor component 814 may also include a proximity detector, which is configured to detect the presence of nearby objects in case of no physical touch. The sensor component 814 may also include an optical sensor, for example, CMOS or CCD image sensor for imaging. In some embodiments, the sensor component 814 may also include an acceleration sensor, a gyro sensor, a magnetic sensor, a pressure sensor, or a temperature sensor.

The communication component 816 is configured to facilitate wired communication or wireless communication between the device 800 and other equipment. The device 800 is available for access to wireless network based on communication standards, for example, WiFi, 2G or 3G, or combination thereof. In an exemplary embodiment, the communication component 816 receives by means of a broadcast channel the broadcast signal or broadcast-related information from external broadcast management systems. In an exemplary embodiment, the communication component 816 also includes a near field communication (NFC) module for promoting short-range communication. For example, the NFC module may be realized on the basis of Radio Frequency Determination (RFID) Technology, Infrared Data Association (IrDA) Technology, Ultra-wide Bandwidth (UWB) Technology, Bluetooth (BT) Technology and other technologies.

In exemplary embodiments, the device 800 may be realized by one or a plurality of application specific integrated circuits (ASIC), digital signal processors (DSP), digital signal processing equipment (DSPD), programmable logic devices (PLD), field programmable gate arrays (FPGA), controllers, microcontrollers, microprocessors or other electronic components, configured to execute the above methods.

In exemplary embodiments, a non-transitory computer-readable storage medium including instructions is also provided, for example, a memory 804 including instructions, above instructions may be executed by the processors 820 of the device 800 so as to achieve the above methods. For example, the non-transitory computer-readable storage medium may be ROM, random access memory (RAM), CD-ROM, magnetic tape, floppy disk and optical data storage device, etc.

There is provided a non-transitory computer-readable storage medium. When instructions in the storage medium are executed by the processor of the mobile terminal, the mobile terminal may execute a light metering method, and the method comprises:

> acquiring a touch screen point inputted by users and situated in a light metering area;
> determining an initial light metering area comprising the touch screen point in an entire image displayed on a touchscreen;
> segmenting an image comprised in the initial light metering area into a background region dispensed with light metering and an object region comprising the touch screen point and finally serving as a light metering area; and
> metering image points within the object region.

## Claims

**1.** A light metering method, comprising steps of:

> acquiring (S201) a touch screen point inputted by users and situated in a light metering area;
> determining (S202) an initial light metering area comprising the touch screen point in an entire image displayed on a touchscreen;
> segmenting (S203) an image comprised in the initial light metering area into a background region dispensed with light metering and an object region comprising the touch screen point and finally serving as a light metering area; and
> metering (S204) image points within the object region;
> **characterized in that**,
> the step (S203) of segmenting an image comprised in the initial light metering area into a background region dispensed with light metering and an object region comprising the touch screen point and finally serving as a light metering area, comprises steps of:
>
>> calculating (S401) color distances between the touch screen point and to-be-tagged points, which are of to-be-tagged attributes and are adjacent to the touch screen point in the up, down, left and right direction, and calculating color distances between the image boundary points of the initial light metering area and to-be-tagged points, which are of to-be-tagged attributes and are within the image boundary of the initial light metering area and adjacent to the image boundary points of the initial light metering area, a to-be-tagged attribute being chosen from : an object region point, a background region point and a segmentation point, the touch screen point and the image boundary points being initial tagged points which are respectively an object region point and background region points;

acquiring (S402) an Nth to-be-tagged point and at least one adjacent tagged point corresponding to a minimum color distance, $N \geq 1$;

determining (S403), according to the attribute of the at least one adjacent tagged point, the attribute of the Nth to-be-tagged point, and determining the Nth to-be-tagged point as an ith new tagged point, $i \geq 1$;

determining (S404) new to-be-tagged points according to the ith new tagged point, and calculating color distances between the new to-be-tagged points and tagged points that are adjacent to the new to-be-tagged points in the up, down, left and right direction;

wherein, the object region is composed of object region points, the background region is composed of background region points, and both the object region and the background region is segmented by segmentation points;

and wherein, the step (S403) of determining, according to the attribute of the at least one adjacent tagged point, the attribute of the $N^{th}$ to-be-tagged point, comprises steps of:

judging (S501) whether the attribute of the at least one adjacent tagged points of the $N^{th}$ to-be-tagged point comprises both the object region point and the background region point;

determining (S502) the attribute of the $N^{th}$ to-be-tagged point as the segmentation point in a case where the attribute of the at least one adjacent tagged point comprises both the object region point and the background region point; otherwise, judging (S503) whether the attribute of the at least one adjacent tagged point of the $N^{th}$ to-be-tagged point only comprises the object region point; and

determining (S504) the attribute of the $N^{th}$ to-be-tagged point as the object region point in a case where the attribute of the at least one adjacent tagged point only comprises the object region point; otherwise, determining (S505) the attribute of the $N^{th}$ to-be-tagged point as the background region point.

2. The method according to claim 1, wherein, the step (S202) of determining an initial light metering area comprising the touch screen point in an entire image displayed on a touchscreen comprises a step of:
determining 1~8% area, comprising the touch screen point, of the entire image displayed on a touchscreen as the initial light metering area.

3. A light metering device, comprising:

a touch screen point acquisition module (81), configured to acquire a touch screen point inputted by users and situated in a light metering area;
an initial light metering area determination module (82), configured to determine an initial light metering area comprising the touch screen point in an entire image displayed on a touchscreen;
an image segmentation module (83), configured to segment an image comprised in the initial light metering area into a background region dispensed with light metering and an object region comprising the touch screen point and finally serving as a light metering area; and
a metering module (84), configured to meter image points within the object region;
**characterized in that**,
the image segmentation module (83) comprises:

a color distance calculation unit (901), configured to calculate color distances between the touch screen point and to-be-tagged points, which are of to-be-tagged attributes and are adjacent to the touch screen point in the up, down, left and right direction, and to calculate color distances between the image boundary points of the initial light metering area and to-be-tagged points, which are of to-be-tagged attributes and are within the image boundary of the initial light metering area and adjacent to the image boundary points of the initial light metering area, the attribute being chosen from: an object region point, a background region point and a segmentation point, the touch screen point and the image boundary points being initial tagged points which are respectively an object region point and background region points;

a to-be-tagged point acquisition unit (902), configured to acquire an Nth to-be-tagged point and at least one adjacent tagged point corresponding to a minimum color distance, $N \geq 1$;

a to-be-tagged point attribute determination unit (903), configured to determine, according to the attribute of the at least one adjacent tagged points, the attribute of the Nth to-be-tagged point, and to determine the Nth to-be-tagged point as an ith new tagged point, $i \geq 1$;

a new to-be-tagged point determination unit (904), configured to determine new to-be-tagged points according to the ith new tagged point, and the color distance calculation unit 901 is further configured to calculate color distances between the new to-be-tagged points and tagged points that are adjacent to the new to-be-tagged points in the up, down, left and right direction ;

wherein, the object region is composed of object region points, the background region is composed of background region points, and both the object region and the background region is segmented by segmentation points;

and wherein the to-be-tagged point attribute determination unit (903) comprises:

a first judgment subunit (1001), configured to judge whether the attribute of the at least one adjacent tagged point of the $N^{th}$ to-be-tagged point comprises both the object region point and the background region points; and to trigger a segmentation point determination subunit in a case where the attribute of the at least one adjacent tagged point comprises both the object region point and the background region point; otherwise, to trigger a second judgment subunit;

the segmentation point determination subunit (1002), configured to determine the attribute of the $N^{th}$ to-be-tagged point as the segmentation point in the case where the attribute of the at least one adjacent tagged point comprises both the object region point and the background region point;

the second judgment subunit (1003), configured to judge whether the attribute of the at least one only comprises the object region point; and to trigger an object region point determination subunit in a case where the attribute of the at least one adjacent tagged point only comprises the object region point; otherwise, to trigger a background region point determination subunit.

the object region point determination subunit (1004), configured to determine the attribute of the $N^{th}$ to-be-tagged point as the object region point; and

the background region point determination subunit (1005), configured to determine the attribute of the $N^{th}$ to-be-tagged point as the background region point.

4. The device according to claim 3, wherein, the initial light metering area determination module (82) is configured to determine 1~8% area, comprising the touch screen point, of the entire image displayed on a touchscreen as the initial light metering area.

5. A computer program including instructions for executing the steps of a light metering method according to any one of claims 1 to 2 when said program is executed by a computer.

6. A recording medium readable by a computer and having recorded thereon a computer program including instructions for executing the steps of a light metering method according to any one of claims 1 to 2.

**Patentansprüche**

1. Lichtmessverfahren, umfassend Schritte des:

Erfassens (S201) eines Berührungsbildschirmpunkts, der durch Benutzer eingegeben wird und sich in einem Lichtmessbereich befindet, Bestimmens (S202) eines Anfangslichtmessbereichs, der den Berührungsbildschirmpunkt umfasst, in einem gesamten auf einem Berührungsbildschirm angezeigten Bild, Segmentierens (S203) eines Bilds, das in dem Anfangslichtmessbereich enthalten ist, in einen vom Lichtmessen ausgenommenen Hintergrundbereich und einen Objektbereich, der den Berührungsbildschirmpunkt umfasst und schließlich als ein Lichtmessbereich dient, und Messens (S204) von Bildpunkten innerhalb des Objektbereichs, **dadurch gekennzeichnet, dass** der Schritt (S203) des Segmentierens eines Bilds, das in dem Anfangslichtmessbereich enthalten ist, in einen vom Lichtmessen ausgenommenen Hintergrundbereich und einen Objektbereich, der den Berührungsbildschirmpunkt umfasst und schließlich als ein Lichtmessbereich dient, Schritte umfasst des:

Berechnens (S401) von Farbabständen zwischen dem Berührungsbildschirmpunkt und zu kennzeichnenden Punkten, die zu kennzeichnende Merkmale aufweisen und benachbart zu dem Berührungsbildschirmpunkt in der Richtung nach oben, unten, links und rechts sind, und Berechnens von Farbabständen zwischen den Bildgrenzpunkten des Anfangslichtmessbereichs und zu kennzeichnenden Punkten, die zu kennzeichnende Merkmale aufweisen und innerhalb der Bildgrenze des Anfangslichtmessbereichs und benachbart zu den Bildgrenzpunkten des Anfangslichtmessbereichs sind, wobei ein zu kennzeichnendes Merkmal ausgewählt wird aus: einem Objektbereichspunkt, einem Hintergrundbereichspunkt und einem Segmentierungspunkt, wobei der Berührungsbildschirmpunkt und die Bildgrenzpunkte anfangs gekennzeichnete Punkte sind, die jeweils ein Objektbereichspunkt und Hintergrundbereichspunkte sind,

Erfassens (S402) eines N-ten zu kennzeichnenden Punkts und mindestens eines benachbarten gekennzeichneten Punkts entsprechend einem Mindestfarbabstand, $N \geq 1$,

Bestimmens (S403) gemäß dem Merkmal des mindestens einen benachbarten gekennzeichneten Punkts des Merkmals des N-ten zu kennzeichnenden Punkts und Bestimmen des N-ten zu kennzeichnenden Punkts als einen i-ten neuen gekennzeichneten Punkt, $i \geq 1$,

Bestimmens (S404) von neuen zu kennzeichnenden Punkten gemäß dem i-ten neuen gekennzeichneten Punkt und Berechnen von Farbabständen zwischen den neuen zu kennzeichnenden Punkten und gekennzeichneten Punkten, die benachbart zu den neuen zu kennzeichnenden Punkten in der Richtung nach oben, unten, links und rechts sind,

wobei der Objektbereich aus Objektbereichspunkten besteht, der Hintergrundbereich aus Hintergrundbereichspunkten besteht und sowohl der Objektbereich als auch der Hintergrundbereich durch Segmentierungspunkte segmentiert sind,

und wobei der Schritt (S403) des Bestimmens gemäß dem Merkmal des mindestens einen benachbarten gekennzeichneten Punkts des Merkmals des N-ten zu kennzeichnenden Punkts Schritte umfasst des:

Beurteilens (S501), ob das Merkmal des mindestens einen benachbarten gekennzeichneten Punkts des N-ten zu kennzeichnenden Punkts sowohl den Objektbereichspunkt als auch den Hintergrundbereichspunkt umfasst, Bestimmens (S502) des Merkmals des N-ten zu kennzeichnenden Punkts als den Segmentierungspunkt in einem Fall, in dem das Merkmal des mindestens einen benachbarten gekennzeichneten Punkts sowohl den Objektbereichspunkt als auch den Hintergrundbereichspunkt umfasst, andernfalls Beurteilen (S503), ob das Merkmal des mindestens einen benachbarten gekennzeichneten Punkts des N-ten zu kennzeichnenden Punkts nur den Objektbereichspunkt umfasst, und Bestimmens (S504) des Merkmals des N-ten zu kennzeichnenden Punkts als den Objektbereichspunkt in einem Fall, in dem das Merkmal des mindestens einen benachbarten gekennzeichneten Punkts nur den Objektbereichspunkt umfasst, andernfalls Bestimmens (S505) des Merkmals des N-ten zu kennzeichnenden Punkts als den Hintergrundbereichspunkt.

2. Verfahren nach Anspruch 1, wobei der Schritt (S202) des Bestimmens eines Anfangslichtmessbereichs, der den Berührungsbildschirmpunkt umfasst, in einem gesamten Bild, das auf einem Berührungsbildschirm angezeigt wird, einen Schritt umfasst des: Bestimmens von 1-8 % eines Bereichs, der den Berührungsbildschirmpunkt umfasst, des gesamten Bilds, das auf einem Berührungsbildschirm angezeigt wird, als den Anfangslichtmessbereich.

3. Lichtmessvorrichtung, umfassend:

ein Berührungsbildschirmpunkt-Erfassungsmodul (81), das konfiguriert ist, um einen Berührungsbildschirmpunkt zu erfassen, der durch Benutzer eingegeben wird und sich in einem Lichtmessbereich befindet, ein Anfangslichtmessbereich-Bestimmungsmodul (82), das konfiguriert ist, um einen Anfangslichtmessbereich zu bestimmen, der den Berührungsbildschirmpunkt umfasst, in einem gesamten Bild, das auf einem Berührungsbildschirm angezeigt wird, ein Bild-Segmentierungsmodul (83), das konfiguriert ist, um ein Bild, das in dem Anfangslichtmessbereich enthalten ist, in einen vom Lichtmessen ausgenommenen Hintergrundbereich und einen Objektbereich, der den Berührungsbildschirmpunkt

umfasst und schließlich als ein Lichtmessbereich dient, zu segmentieren, und

ein Messmodul (84), das konfiguriert ist, um Bildpunkte innerhalb des Objektbereichs zu messen,

**dadurch gekennzeichnet, dass**

das Bild-Segmentierungsmodul (83) umfasst:

eine Farbabstand-Berechnungseinheit (901), die konfiguriert ist, um Farbabstände zwischen dem Berührungsbildschirmpunkt und zu kennzeichnenden Punkten, die zu kennzeichnende Merkmale aufweisen und benachbart zu dem Berührungsbildschirmpunkt in der Richtung nach oben, unten, links und rechts sind, zu berechnen und um Farbabstände zwischen den Bildgrenzpunkten des Anfangslichtmessbereichs und zu kennzeichnenden Punkten, die zu kennzeichnende Merkmale aufweisen und innerhalb der Bildgrenze des Anfangslichtmessbereichs und benachbart zu den Bild-grenzpunkten des Anfangslichtmessbe-reichs sind, zu berechnen, wobei das Merkmal ausgewählt wird aus: einem Objektbe-reichspunkt, einem Hintergrundbereichs-punkt und einem Segmentierungspunkt, wobei der Berührungsbildschirmpunkt und die Bildgrenzpunkte anfangs gekennzeichnete Punkte sind, die jeweils ein Objektbe-reichspunkt und Hintergrundbereichspunk-te sind,

eine Erfassungseinheit (902) für einen zu kennzeichnenden Punkt, die konfiguriert ist, um einen N-ten zu kennzeichnenden Punk und mindestens einen benachbarten gekennzeichneten Punkt entsprechend einem Mindestfarbabstand, N≥1, zu erfassen,

eine Bestimmungseinheit (903) für ein Merkmal des zu kennzeichnenden Punkts, die konfiguriert ist, um gemäß dem Merkmal des mindestens einen benachbarten gekennzeichneten Punkts das Merkmal des N-ten zu kennzeichnenden Punkts zu bestimmen und den N-ten zu kennzeichnenden Punkt als einen i-ten neuen gekennzeichneten Punkt, i≥1, zu bestimmen,

eine Bestimmungseinheit (904) für einen neuen zu kennzeichnenden Punkt, die konfiguriert ist, um neue zu kennzeichnende Punkte gemäß dem i-ten neuen gekennzeichneten Punkt zu bestimmen, und wobei die Farbabstand-Berechnungseinheit 901 ferner konfiguriert ist, um Farbabstände zwischen den neuen zu kennzeichnenden Punkten und gekennzeichneten Punkten, die benachbart zu den neuen zu kennzeichnenden Punkten in der Richtung nach oben, unten, links und rechts sind, zu berechnen, wobei der Objektbereich aus Objektbe-reichspunkten besteht, der Hintergrund-bereich aus Hintergrundbereichspunkten be-steht und sowohl der Objektbereich als auch der Hintergrundbereich durch Segmentierungspunkte segmentiert sind,

und wobei die Bestimmungseinheit (903) für ein Merkmal des zu kennzeichnenden Punkts umfasst:

eine erste Beurteilungsuntereinheit (1001), die konfiguriert ist, um zu beurteilen, ob das Merkmal des mindestens einen benachbarten gekennzeichneten Punkts des N-ten zu kennzeichnen-den Punkts sowohl den Objektbe-reichspunkt als auch die Hintergrund-bereichspunkte umfasst, und um eine Segmentierungspunkt-Bestimmungsuntereinheit in einem Fall auszulösen, in dem das Merkmal des mindestens einen benachbarten gekennzeichne-ten Punkts sowohl den Objektbereichs-punkt als auch den Hintergrundbe-reichspunkt umfasst, andernfalls um ei-ne zweite Beurteilungsuntereinheit auszulösen,

die Segmentierungspunkt-Bestim-mungsuntereinheit (1002), die konfigu-riert ist, um das Merkmal des N-ten zu kennzeichnenden Punkts als den Segmentierungspunkt in dem Fall zu bestimmen, in dem das Merkmal des min-destens einen benachbarten gekenn-zeichneten Punkts sowohl den Objekt-bereichspunkt als auch den Hinter-grundbereichspunkt umfasst,

die zweite Beurteilungsuntereinheit (1003), die konfiguriert ist, um zu beurteilen, ob das Merkmal des mindestens einen nur den Objektbereichspunkt umfasst, und um eine Objektbereichs-punkt-Bestimmungsuntereinheit in ei-nem Fall auszulösen, in dem das Merk-mal des mindestens einen benachbar-ten gekennzeichneten Punkts nur den Objektbereichspunkt umfasst, andern-falls um eine Hintergrundbereichs-punkt-Bestimmungsuntereinheit aus-zulösen,

die Objektbereichspunkt-Bestim-mungsuntereinheit (1004), die konfigu-

riert ist, um das Merkmal des N-ten zu kennzeichnenden Punkts als den Objektbereichspunkt zu bestimmen, und die Hintergrundbereichspunkt-Bestimmungsuntereinheit (1005), die konfiguriert ist, um das Merkmal des N-ten zu kennzeichnenden Punkts als den Hintergrundbereichspunkt zu bestimmen.

4. Vorrichtung nach Anspruch 3, wobei das Anfangslichtmessbereich-Bestimmungsmodul (82) konfiguriert ist, um 1-8 % eines Bereichs, der den Berührungsbildschirmpunkt umfasst, des gesamten Bilds, das auf einem Berührungsbildschirm angezeigt wird, als den Anfangslichtmessbereich zu bestimmen.

5. Computerprogramm, das Anweisungen zum Ausführen der Schritte eines Lichtmessverfahrens nach einem der Ansprüche 1 bis 2 aufweist, wenn das Programm durch einen Computer ausgeführt wird.

6. Aufzeichnungsmedium, das durch einen Computer lesbar ist und darauf ein Computerprogramm aufgezeichnet hat, das Anweisungen zum Ausführen der Schritte eines Lichtmessverfahrens nach einem der Ansprüche 1 bis 2 aufweist.

**Revendications**

1. Procédé de mesure de lumière, comprenant les étapes qui consistent à :

acquérir (S201) un point d'écran tactile fourni par des utilisateurs et situé dans une zone de mesure de lumière ;
déterminer (S202) une zone de mesure de lumière initiale comprenant le point d'écran tactile sur une image entière affichée sur un écran tactile ;
segmenter (S203) une image comprise dans la zone de mesure de lumière initiale en une zone de fond qui se dispense de la mesure de lumière et une zone d'objet qui comprend le point d'écran tactile et sert finalement de zone de mesure de lumière ; et
mesurer (S204) des points d'image dans la zone d'objet ;
**caractérisé en ce que**
l'étape (S203) de segmentation d'une image comprise dans la zone de mesure de lumière initiale en une zone de fond qui se dispense de la mesure de lumière et une zone d'objet qui comprend le point d'écran tactile et qui sert finalement de zone de mesure de lumière comprend les étapes qui consistent à :

calculer (S401) des distances de couleurs entre le point d'écran tactile et des points à marquer, qui font partie d'attributs à marquer et sont adjacents au point d'écran tactile vers le haut, le bas, la gauche et la droite, et calculer les distances de couleurs entre les points de délimitation de l'image de la zone de mesure de lumière initiale et les points à marquer, qui font partie d'attributs à marquer et se trouvent dans les limites d'image de la zone de mesure de lumière initiale et sont adjacents aux points de délimitation d'image de la zone de mesure de lumière initiale, un attribut à marquer étant choisi parmi : un point de zone d'objet, un point de zone de fond et un point de segmentation, le point d'écran tactile et les points de délimitation d'image étant des points marqués initiaux qui sont respectivement un point de zone d'objet et des points de zone de fond ;
acquérir (S402) un $n^{\text{ième}}$ point à marquer et au moins un point marqué adjacent correspondant à une distance de couleur minimum, $N \geq 1$ ;
déterminer (S403), selon l'attribut du au moins un point marqué adjacent, l'attribut du $n^{\text{ième}}$ point à marquer, et déterminer le $n^{\text{ième}}$ point à marquer comme étant un $i^{\text{ième}}$ nouveau point marqué, $i \geq 1$ ;
déterminer (S404) de nouveaux points à marquer selon le $i^{\text{ième}}$ nouveau point marqué, et calculer les distances de couleurs entre les nouveaux points à marquer et les points marqués qui sont adjacents aux nouveaux points à marquer vers le haut, le bas, la gauche et la droite ;
dans lequel la zone d'objet est composée des points de zone d'objet, la zone de fond est composée des points de zone de fond, et la zone d'objet et la zone de fond sont segmentées par des points de segmentation ;
et dans lequel l'étape (S403) de détermination, selon l'attribut du au moins un point marqué adjacent, de l'attribut du $n^{\text{ième}}$ point à marquer, comprend les étapes qui consistent à :

juger (S501) si l'attribut du au moins un point marqué adjacent du $n^{\text{ième}}$ point à marquer comprend le point de zone d'objet et le point de zone de fond ;
déterminer (S502) l'attribut du $n^{\text{ième}}$ point à marquer comme étant le point de segmentation lorsque l'attribut du au moins un point marqué adjacent comprend le point de zone d'objet et le point de zone de fond ; sinon, juger (S503) si l'attribut du au moins un point marqué adjacent du n$^{ième}$ point à marquer comprend uniquement le point de zone d'objet ; et

déterminer (S504) l'attribut du n$^{ième}$ point à marquer comme étant le point de zone d'objet lorsque l'attribut du au moins un point marqué adjacent comprend uniquement le point de zone d'objet ; sinon, déterminer (S505) l'attribut du n$^{ième}$ point à marquer comme étant le point de zone de fond.

**2.** Procédé selon la revendication 1, dans lequel l'étape (S202) de détermination d'une zone de mesure de lumière initiale comprend le point d'écran tactile sur une image entière affichée sur un écran tactile comprend une étape qui consiste à :

déterminer une zone de 1 à 8 %, comprenant le point d'écran tactile, de l'image entière affichée sur un écran tactile comme étant la zone de mesure de lumière initiale.

**3.** Dispositif de mesure de lumière, comprenant :

un module d'acquisition de point d'écran tactile (81), configuré pour acquérir un point d'écran tactile fourni par des utilisateurs et situé dans une zone de mesure de lumière ;

un module de détermination de zone de mesure de lumière initiale (82), configuré pour déterminer une zone de mesure de lumière initiale comprenant le point d'écran tactile sur une image entière affichée sur un écran tactile ;

un module de segmentation d'image (83), configuré pour segmenter une image comprise dans la zone de mesure de lumière initiale en une zone de fond qui se dispense de la mesure de lumière et une zone d'objet comprenant le point d'écran tactile et servant finalement de zone de mesure de lumière ; et

un module de mesure (84), configuré pour mesurer des points d'image dans la zone d'objet ; **caractérisé en ce que**

le module de segmentation d'image (83) comprend :

une unité de calcul de distance de couleurs (901), configurée pour calculer des distances de couleurs entre le point d'écran tactile et des points à marquer, qui font partie d'attributs à marquer et sont adjacents au point d'écran tactile vers le haut, le bas, la gauche et la droite, et pour calculer les distances de couleurs entre les points de délimitation de l'image de la zone de mesure de lumière initiale et les points à marquer, qui font partie d'attributs à marquer et se trouvent dans les limites d'image de la zone de mesure de lumière initiale et sont adjacents aux points de délimitation d'image de la zone de mesure de lumière initiale, un attribut à marquer étant choisi parmi : un point de zone d'objet, un point de zone de fond et un point de segmentation, le point d'écran tactile et les points de délimitation d'image étant des points marqués initiaux qui sont respectivement un point de zone d'objet et des points de zone de fond ;

une unité d'acquisition de point à marquer (902), configurée pour acquérir un n$^{ième}$ point à marquer et au moins et au moins un point marqué adjacent correspondant à une distance de couleur minimum, N$\geq$1 ;

une unité de détermination d'attribut de point à marquer (903), configurée pour déterminer, selon l'attribut du au moins un point marqué adjacent, l'attribut du n$^{ième}$ point à marquer, et pour déterminer le n$^{ième}$ point à marquer comme étant un i$^{ème}$ nouveau point marqué, i$\geq$1 ;

une unité de détermination de nouveau point à marquer (904), configurée pour déterminer de nouveaux points à marquer selon le i$^{ème}$ nouveau point marqué, et l'unité de calcul de distance de couleurs (901) est en outre configurée pour calculer les distances de couleurs entre les nouveaux points à marquer et les points marqués qui sont adjacents aux nouveaux points à marquer vers le haut, le bas, la gauche et la droite ; dans lequel la zone d'objet est composée de points de zone d'objet, la zone de fond est composée de points de zone de fond, et la zone d'objet et la zone de fond sont segmentées par des points de segmentation ;

et dans lequel l'unité de détermination d'attribut de point à marquer (903) comprend :

une première sous-unité de jugement (1001), configurée pour juger si l'attribut du au moins un point marqué adjacent du n$^{ième}$ à point à marquer comprend le point de zone d'objet et les points de zone de fond ; et pour déclencher une sous-unité de détermination de point de segmentation lorsque l'attribut du au moins un point marqué adjacent comprend le point de zone d'objet et le point de zone de fond ; sinon pour déclencher une seconde sous-unité de jugement ;

la sous-unité de détermination de point de segmentation (1002), configurée pour déterminer l'attribut du n$^{ième}$ point à marquer comme étant le point de segmentation lorsque l'attribut du au moins un point marqué adjacent comprend le point de zone d'objet et le point de zone de fond ;

la seconde sous-unité de détermination (1003), configurée pour juger si le $n^{ième}$ point à marquer comprend uniquement le point de zone d'objet ; et pour déclencher une sous-unité de détermination de point de zone d'objet lorsque l'attribut du au moins un point marqué adjacent comprend uniquement le point de zone d'objet ; sinon, pour déclencher une sous-unité de détermination de point de zone de fond,

la sous-unité de détermination de point de zone d'objet (1004), configurée pour déterminer l'attribut du $n^{ième}$ point à marquer comme étant le point de zone d'objet ; et

la sous-unité de détermination de point de zone de fond (1005), configurée pour déterminer l'attribut du $n^{ième}$ point à marquer comme étant le point de zone de fond.

4. Dispositif selon la revendication 3, dans lequel le module de détermination de zone de mesure de lumière initiale (82) est configuré pour déterminer une zone de 1 à 8 %, comprenant le point d'écran tactile, de l'image entière affichée sur un écran tactile comme étant la zone de mesure de lumière initiale.

5. Programme informatique comprenant des instructions destinées à exécuter les étapes d'un procédé de mesure de lumière selon l'une quelconque des revendications 1 à 2 lorsque ledit programme est exécuté par un ordinateur.

6. Support d'enregistrement lisible par un ordinateur et stockant un programme informatique qui comprend des instructions destinées à exécuter les étapes d'un procédé de mesure de lumière selon l'une quelconque des revendications 1 à 2.

FIG.1

Acquire a touch screen point inputted by users and situated in a light metering area — S201

Determine an initial light metering area comprising the touch screen point in an entire image displayed on a touchscreen — S202

Segment an image comprised in the initial light metering area, into a background region dispensed with light metering and an object region comprising the touch screen point and finally serving as a light metering area — S203

Meter image points within the object region — S204

**FIG.2**

**FIG.3**

Calculating color distances between the touch screen point and to-be-tagged points, which are of to-be-tagged attributes and are adjacent to and adjacent to the touch screen point in the up, down, left and right direction, and calculating color distances between the image boundary points of the initial light metering area and to-be-tagged points, which are of to-be-tagged attributes and are adjacent to image boundary points of the initial light metering area, a to-be-tagged attribute being chosen from : an object region point, a background region point and a segmentation point

S401

Acquiring an Nth to-be-tagged point and at least one adjacent tagged point corresponding to a minimum color distance, N≥1

S402

Determining, according to the attribute of the at least one adjacent tagged point, the attribute of the Nth to-be-tagged point, and determining the Nth to-be-tagged point as an ith new tagged point, i≥1

S403

Determining new to-be-tagged points according to the ith new tagged point, and calculating color distances between the new to-be-tagged points and tagged points that are adjacent to the new to-be-tagged points in the up, down, left and right direction

S404

# FIG.4

**FIG.6**

Judge whether adjacent tagged points of the Nth to-be-tagged point in up, down, left or right direction comprise both object region points and background regionpoints — 501

Yes

502 — Determine the Nth to-be-tagged point as a segmentation point

No

503 — Judge whether adjacent tagged points of the N$^{th}$ to-be-tagged point in up, down, left or right direction comprise only object region points

Yes

504 — Determine the Nth to-be-tagged point as an object region point

No

505 — Determine the N$^{th}$ to-be-tagged point as a background region point

**FIG.5**

# FIG.7

# FIG.8

FIG.9

FIG.10

EP 2 981 065 B1

**FIG.11**

**EP 2 981 065 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7034881 B1
- EP 2698693 A1